# EUROPEAN PATENT APPLICATION

(11) **EP 4 092 636 A2**
(43) Date of publication of application: **23.11.2022**
(21) Application number: 22197903.2
(22) Date of filing: 27.09.2022
(51) Int. Cl.: G06V 40/16, G06V 10/75, G06V 10/82, H04N 7/15, G06N 3/02

(54) **METHOD AND APPARATUS OF GENERATING VIRTUAL IDOL, AND ELECTRONIC DEVICE**

(30) Priority: 29.10.2021 CN 202111279831
(71) Applicant: BEIJING BAIDU NETCOM SCIENCE TECHNOLOGY CO., LTD., Beijing 100085 (CN)
(72) Inventor: ZHANG, Henan, Beijing 100085 (CN); LIU, Jiaming, Beijing 100085 (CN); LI, Yunhao, Beijing 100085 (CN); SUN, Hao, Beijing 100085 (CN)
(74) Representative: von Tietzen und Hennig, Nikolaus

(57) **Abstract**

The present disclosure provides a method and an apparatus of generating a virtual idol, and an electronic device, and relates to the technical field of artificial intelligence such as computer vision and deep learning. A specific implementation solution is: during obtaining of a virtual idol, feature information of a target object may be obtained, and then the feature information of the target object is used as a generation basis for the virtual idol, so that a target virtual face matching with the feature information may be determined from a preset face material library in a targeted manner, and a target motion video matching with the feature information may be determined from a preset motion video library; and then the virtual face and a facial image in the motion video are fused, which may generate, in a targeted manner, the virtual idol for a scenario where the target object is endorsed, so that the virtual idol may subsequently be used to endorse the target object.

## Description

### TECHNICAL FIELD

The present disclosure relates to the technical field of image processing, in particular to the technical field of artificial intelligence such as computer vision and deep learning, and specifically to a method and an apparatus of generating a virtual idol, and an electronic device.

### BACKGROUND

A virtual idol is a character image that is made by means of painting, animation, and the like, and performs activities in a virtual scenario such as the Internet or in a real-world scenario, but does not exist in a form of a physical entity.

When a virtual idol is used to replace a real person to perform an activity, taking a product endorsement scenario as an example, how to generate the virtual idol in the product endorsement scenario to replace the real person with the virtual idol to endorse a product is an urgent problem to be solved by those skilled in the art.

### SUMMARY

The present disclosure provides a method and an apparatus of generating a virtual idol, and an electronic device, which may generate, in a targeted manner, a virtual idol for a scenario where a target object is endorsed, so that the virtual idol may subsequently be used to endorse the target object.

According to a first aspect of the present disclosure, a method of generating a virtual idol is provided, and the method of generating a virtual idol may include:
obtaining feature information of a target object;
determining, from a preset face material library, a target virtual face matching with the feature information, and determining, from a preset motion video library, a target motion video matching with the feature information; and
fusing the target virtual face and a facial image in the target motion video to generate a virtual idol corresponding to the target object.

According to a second aspect of the present disclosure, an apparatus of generating a virtual idol is provided, and the apparatus of generating a virtual idol may include:
an obtaining unit configured to obtain feature information of a target object;
a determination unit configured to determine, from a preset face material library, a target virtual face matching with the feature information, and determine, from a preset motion video library, a target motion video matching with the feature information; and
a fusion unit configured to fuse the target virtual face and a facial image in the target motion video to generate a virtual idol corresponding to the target object.

According to a third aspect of the present disclosure, a computer-readable storage medium having computer program instructions stored thereon, is provided, where the computer program instructions, when executed by a processor, cause the processor to perform the method according to the first aspect.

According to a fourth aspect of the present disclosure, a computer program product comprising computer program instructions is provided, where the computer program instructions when executed by a processor, cause the processor to perform the method according to the first aspect.

According to the technical solutions of the present disclosure, a virtual idol for a scenario where a target object is endorsed may be generated in a targeted manner, so that the virtual idol may subsequently be used to endorse the target object.

It should be understood that the content described in this section is not intended to identify critical or important features of the embodiments of the present disclosure, and is not used to limit the scope of the present disclosure. Other features of the present disclosure will be easily understood through the following description.

### BRIEF DESCRIPTION OF THE DRAWINGS

The accompanying drawings are used for a better understanding of the solutions, and do not constitute a limitation on the present disclosure. In the accompanying drawings:
FIG. 1 is a schematic flowchart of a method of generating a virtual idol according to Embodiment 1 of the present disclosure;
FIG. 2 is a schematic diagram of a plurality of virtual faces having real idol temperaments according to an embodiment of the present disclosure;
FIG. 3 is a schematic flowchart of a method of generating a virtual idol corresponding to a target object according to Embodiment 3 of the present disclosure;
FIG. 4 is a schematic diagram of a face fusion network model according to an embodiment of the present disclosure;
FIG. 5 is a schematic diagram of a target fused image according to an embodiment of the present disclosure;
FIG. 6 is a schematic structural diagram of an apparatus 60 of generating a virtual idol according to Embodiment 4 of the present disclosure; and
FIG. 7 is a schematic block diagram of an electronic device according to an embodiment of the present disclosure.

### DETAILED DESCRIPTION OF EMBODIMENTS

Exemplary embodiments of the present disclosure are described below in conjunction with the accompanying drawings, where various details of the embodiments of the present disclosure are included to facilitate understanding, and should only be considered as exemplary. Therefore, those of ordinary skill in the art should be aware that various changes and modifications can be made to the embodiments described herein, without departing from the scope and spirit of the present disclosure. Likewise, for clarity and conciseness, the description of well-known functions and structures is omitted in the following description.

In the embodiments of the present disclosure, "at least one" refers to one or more, and "a plurality of' refers to two or more. "And/or" describes an access relationship between associated objects, and represents that three relationships may exist. For example, A and/or B may represent the following three cases: only A exists, both A and B exist, and only B exists, where A and B may be singular or plural. In the written description of the present disclosure, the character "/" generally indicates an "or" relationship between the associated objects. In addition, in the embodiments of the present disclosure, the terms "first", "second", "third", "fourth", "fifth", and "sixth" are used merely to distinguish the contents of different objects, and have no other special meaning.

The technical solutions provided in the embodiments of the present disclosure may be applied in scenarios such as a product endorsement, a live product sale, and even a film and television performance. Taking the application in the product endorsement as an example, using a virtual idol to perform the product endorsement requires the virtual idol to be generated first. The virtual idol is a character image that is made by means of painting, animation, and the like, performs activities in a virtual scenario such as the Internet or in a real-world scenario, but does not exist in a form of a physical entity.

In the prior art, during generation of a virtual idol, a 3D modeling technique is usually used to design a 3D virtual image firstly; then a professional motion capture device is used to optically capture motions and expressions of a real person; and lastly the motions and expressions optically captured are mapped to the 3D virtual image to drive the virtual idol to performs the product endorsement.

However, when the existing method of generating a virtual idol is used, that is, the 3D modeling technique is used to design the 3D virtual image, the design of the virtual idol is complex, and personification thereof is poor. Furthermore, when optical capture is used to capture the motions and expressions of the real person, an inertia capture has a poor accuracy, and is vulnerable to geomagnetic interference.

To improve the generation the virtual idol, it is possible to select, in a targeted manner based on feature information of a target object requiring endorsement, a virtual face and a motion video that match with feature information; and use a face fusion technique to fuse the virtual face and a facial image in the motion video, so that, in a targeted manner, the virtual idol for a scenario where the target object is endorsed may generated and the virtual idol may subsequently be used to endorse the target object. In addition, when the virtual idol is used to endorse the target object, using the face fusion technique to generate the virtual idol may further effectively solve the problems existing in the generation of the virtual idol in the prior art, that a 3D virtual image has a complex design, a poor personification, and a poor accuracy of inertia capture, and that the inertia capture is vulnerable to a geomagnetic interference.

Based on the above technical concept, the embodiments of the present disclosure provide a method of generating a virtual idol. The method of generating a virtual idol according to the present disclosure will be described in detail below through specific embodiments. It can be understood that the following specific embodiments may be combined with each other, and the same or similar concepts or processes may not be described in detail in some embodiments.

### Embodiment 1

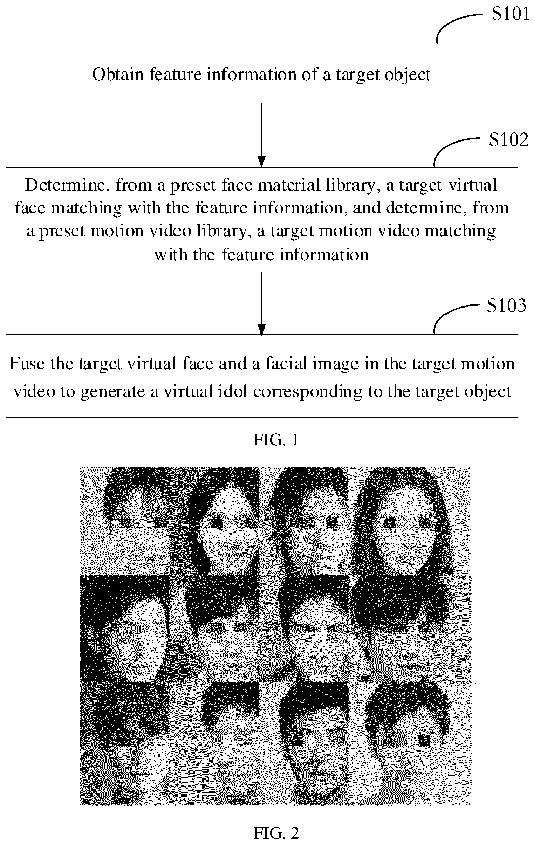

FIG. 1 is a schematic flowchart of a method of generating a virtual idol according to Embodiment 1 of the present disclosure. The method of generating a virtual idol may be performed by a software and/or hardware apparatus. For example, the hardware apparatus may be a terminal or a server. Exemplarily, with reference to FIG. 1, the method of generating a virtual idol may include:
S101: feature information of a target object is obtained.

Exemplarily, the feature information may include suitable population of the target object, a type of the target object, and the like, which may be specifically set according to practical needs. For example, when the target object is sports shoes for children, the feature information includes that the suitable population is children, and that the type is a sports type. When the target object is a product for the elders, the feature information may include that the suitable population is the elders, and the type is a health care type.

Exemplarily, the feature information of the target object may be obtained by directly receiving feature information of the target object input by a user, by receiving feature information of the target object sent by another electronic device, or by obtaining feature information of the target object from a local storage, or by using another method, which may be specifically set according to practical needs. Herein, the embodiments of the present disclosure are described only by taking the above three methods as examples, which does not represent that the embodiments of the present disclosure are only limited thereto.

After the feature information of the target object is obtained, to generate a virtual idol aiming at a scenario where the target object is endorsed, the feature information of the target object may be used as a generation basis, a target virtual face matching with the feature information may be determined from a preset face material library in a targeted manner, and a target motion video matching with the feature information may be determined from a preset motion video library, so that the virtual idol for the scenario where the target object is endorsed may be generated based on the target virtual face and the target motion video, which means that S102 and S103 are performed:
S102: the target virtual face matching with the feature information is determined from the preset face material library, and the target motion video matching with the feature information is determined from the preset motion video library.

The face material library includes a plurality of virtual faces.

It can be understood that before the target virtual face matching with the feature information is determined from the preset face material library, the preset face material library needs to be established in advance. Exemplarily, when the face material library is established in advance, a face generation network model may be used to create a plurality of virtual faces having real idol temperaments, and then the preset face material library is established based on the plurality of virtual faces having real idol temperaments. It should be noted that when a new virtual face is obtained, the new virtual face may be used to update the preset face material library.

Exemplarily, a stylegan2 model, or another network model having a similar function, may be used as the face generation network model, which may be specifically set according to practical needs. The embodiments of the present disclosure are only described by taking the face generation network model being the stylegan2 model as an example, which does not represent that the embodiments of the present disclosure are only limited thereto.

For example, the face generation network model is the stylegan2 model. When the stylegan2 model is used to create a plurality of virtual faces having good looks, a great number of images of real idols may be collected, and the great number of images of real idols may be used to train the initial stylegan2 model to obtain an optimized stylegan2 model; then, the optimized stylegan2 model may be used to generate the plurality of virtual faces having real idol temperaments. Exemplarily, with reference to FIG. 2, FIG. 2 is a schematic diagram of a plurality of virtual faces having real idol temperaments according to an embodiment of the present disclosure. After the plurality of virtual faces having real idol temperaments are obtained, the plurality of virtual faces having real idol temperaments may be used as virtual faces in the face material library to establish the preset face material library.

The motion video library includes a plurality of motion videos, where the motion videos are videos of users' limb motions.

It can be understood that before the target motion video matching with the feature information is determined from the preset motion video library, the preset motion video library needs to be established in advance. Exemplarily, when the motion video library is established in advance, a photographing device, such as a camera, may be used to record a plurality of users' motion videos, and the preset motion video library may be established based on the recorded plurality of users' limb motions. It should be noted that when a new motion video is obtained, the new motion video may be used to update the preset motion video library.

After the feature information of the target object is used as the generation basis, the target virtual face matching with the feature information is determined from the preset face material library, and the target motion video matching with the feature information is determined from the preset motion video library, the following S103 may be performed:
S103: the target virtual face and a facial image in the target motion video are fused to generate the virtual idol corresponding to the target object.

The facial image in the target motion video may be understood as a facial image of a real person, namely, a user's facial image in the target motion video.

Exemplarily, when the target virtual face and the facial image in the target motion video are fused, a face fusion technique may be used to fuse the target virtual face and the facial image in the target motion video, so as to generate the virtual idol.

As can be seen, in the embodiments of the present disclosure, during obtaining of the virtual idol, the feature information of the target object may be obtained, and then the feature information of the target object is used as the generation basis for the virtual idol, so that the target virtual face matching with the feature information may be determined from the preset face material library in a targeted manner, and the target motion video matching with the feature information may be determined from the preset motion video library; and then the virtual face and the facial image in the motion video are fused, which may generate the virtual idol aiming at the scenario where the target object is endorsed, so that the virtual idol may subsequently be used to endorse the target object.

Based on the above embodiment shown in FIG. 1, for ease of understanding of how to determine the target virtual face matching with the feature information from the preset face material library and how to determine the target motion video matching with the feature information from the preset motion video library in S102 shown in Embodiment 1, a detailed description will be made below through Embodiment 2.

### Embodiment 2

When the target virtual face matching with the feature information is determined from the preset face material library, exemplarily, a target virtual face type corresponding to the feature information may be determined first, and then based on the target virtual face type, the target virtual face is determined from the preset face material library.

Exemplarily, a virtual face type may be a youth type, a vivaciousness type, a tastefulness type, a dignity type, a beauty type, a handsomeness type, a sunshine type, and the like, which may be specifically set according to practical needs. Herein, the embodiments of the present disclosure are only described by taking these types as examples, which does not represent that the embodiments of the present disclosure are only limited thereto.

Exemplarily, when the target object is sports shoes for children, and the feature information includes that the suitable population is children, and that the type is a sports type, the corresponding target virtual face type may be the youth type, the vivaciousness type, and/or the like; when the target object is a product for the elders, and the feature information includes that the suitable population is the elders, and that the type is a health care type, the corresponding target virtual face type may be the tastefulness type, the dignity type, and/or the like.

After the target virtual face type corresponding to the feature information is determined, the target virtual face may be determined from the preset face material library based on the target virtual face type. Exemplarily, in addition to the plurality of virtual faces, the face material library includes virtual face types corresponding to the virtual faces, and each virtual face type may be annotated on the corresponding virtual faces.

Exemplarily, there may be two cases of determining the target virtual face from the preset face material library based on the target virtual face type. One case is that when a virtual face corresponding to the target virtual face type is determined from the preset face material library based on the target virtual face type, that is, the number of virtual faces determined is one, the virtual face may be directly determined as the target virtual face; and
the other case is that when virtual faces corresponding to the target virtual face type is determined from the preset face material library based on the target virtual face type, that is, the number of virtual faces determined is more than one, and a plurality of virtual faces are determined based on the target virtual face type, one virtual face further needs to be selected from the virtual faces corresponding to the target virtual face type, and then is determined as the target virtual face.

Exemplarily, when the target virtual face is determined from the virtual faces corresponding to the target virtual face type, the following at least three possible implementations may be included.

In a possible implementation, one virtual face may be randomly selected from the virtual faces corresponding to the target virtual face type, and is determined as the target virtual face.

In another possible implementation, a virtual face having the highest historical frequency of selection may be determined from the virtual faces corresponding to the target virtual face type based on a historical frequency of selection of the virtual faces, and is determined as the target virtual face.

In still another possible implementation, when the target virtual face is determined from the virtual faces corresponding to the target virtual face type, the virtual faces corresponding to the target virtual face type may be displayed to a user, so that the user may select a desired virtual face from the displayed virtual faces according to needs; and in response to a selection instruction of the user among the virtual faces, the target virtual face is determined from the virtual faces.

As can be seen, compared with the first two possible implementations, such an implementation of displaying the virtual faces to the user, and in response to the selection instruction among the virtual faces, determining the target virtual face from the virtual faces takes the user's needs into full consideration, which enables the selected target virtual face to more comply with the user's needs.

It should be noted that in the embodiments of the present disclosure, when the target virtual face is determined from the virtual faces corresponding to the target virtual face type, the above three possible implementations are merely examples for illustration, and specifically may be set according to practical needs.

As can be seen, in the embodiments of the present disclosure, when the target virtual face matching with the feature information is determined from the preset face material library, the target virtual face type corresponding to the feature information may be determined first, and then based on the target virtual face type, the target virtual face is determined from the preset face material library in a targeted manner. The target virtual face determined in this manner is more consistent with the feature information of the target object, and subsequently, the virtual idol for the scenario where the target object is endorsed may be generated in a targeted manner based on the target virtual face, so that the virtual idol may subsequently be used to endorse the target object.

In a process of generating the virtual idol, in addition to determining the target virtual face matching with the feature information from the preset face material library, it is further required to determine the target motion video matching with the feature information from the preset motion video library. The following describes in detail how to determine the target motion video matching with the feature information from the preset motion video library.

When the target motion video matching with the feature information is determined from the preset motion video library, exemplarily, a target costume type corresponding to the feature information may be determined first; and then based on the target costume type, the target motion video is determined from the preset motion video library.

Exemplarily, a costume type may be a sportswear type, a casual-wear type, a formal-wear type, and the like, which may be specifically set according to practical needs. Herein, the embodiments of the present disclosure are only described by taking these types as examples, which does not represent that the embodiments of the present disclosure are only limited thereto.

Exemplarily, when the target object is sports shoes for children, and the feature information includes that the suitable population is children, and that the type is a sports type, the corresponding target costume type may be a sportswear type; when the target object is a product for the elders, and the feature information includes that the suitable population is the elders, and that the type is a health care type, the corresponding target costume type may be the causal-wear type.

After the target costume type corresponding to the feature information is determined, the target motion video may be determined from the preset motion video library based on the target costume type . Exemplarily, in addition to the plurality of motion videos, the motion video library may include costume types corresponding to motion videos, and each costume type may be annotated on the corresponding motion video.

Exemplarily, there may be two cases of determining the target motion video from the preset motion video library based on the target costume type . One case is that when a motion video corresponding to the target costume type is determined from the preset motion video library based on the target costume type, that is, the number of the motion videos determined is one, the motion video may be directly determined as the target motion video; and
the other case is that when motion videos corresponding to the target costume type is determined from the preset motion video library based on the target costume type, that is, the number of the motion videos determined is more than one and a plurality of motion videos are determined based on the target costume type, one motion video further needs to be selected from the motion videos corresponding to the target costume type, and then is determined as the target motion video.

Exemplarily, when the target motion video is determined from the plurality of motion videos corresponding to the target costume type , the following at least three possible implementations may be included:
In a possible implementation, one motion video may be randomly selected from the motion videos corresponding to the target costume type, and is determined as the target motion video.

In another possible implementation, a motion video having the highest historical frequency of selection may be determined from the motion videos corresponding to the target costume type based on a historical frequency of selection of the motion videos, and is determined as the target motion video.

In still another possible implementation, when the target motion video is determined from the motion videos corresponding to the target costume type, the motion videos corresponding to the target costume type may be displayed to the user, so that the user may select a desired motion video from the displayed motion videos according to needs; and in response to a selection instruction of the user among the motion videos, the target motion video is determined from the motion videos.

As can be seen, compared with the first two possible implementations, such an implementation of displaying the plurality of motion videos to the user, and in response to the selection instruction among the plurality of motion videos, determining the target motion video from the motion videos takes the user's needs into fully consideration, which enables the selected target motion video to more comply with the user's needs.

It should be noted that in the embodiments of the present disclosure, when the target motion video is determined from the plurality of motion videos corresponding to the target motion video type, the above three possible implementations are merely examples for illustration, and specifically may be set according to practical needs.

As can be seen, in the embodiments of the present disclosure, when the target motion video matching with the feature information is determined from the preset motion video library, the target motion video type corresponding to the feature information may be determined first, and then based on the target motion video type, the target motion video is determined from the preset motion video library in a targeted manner. The target motion video determined in this manner is more consistent with the feature information of the target object, and subsequently, the virtual idol for the scenario where the target object is endorsed may be generated based on the target motion video in a targeted manner, so that the virtual idol may subsequently be used to endorse the target object.

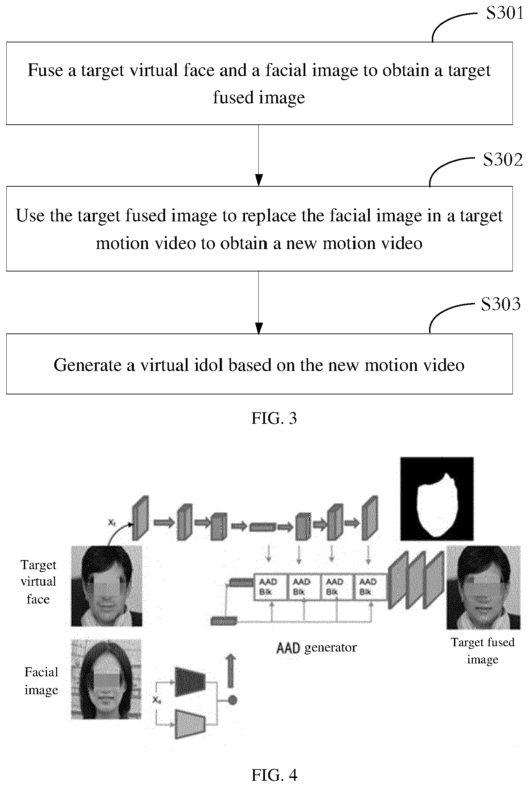

Based on any one of the above embodiments, after the target virtual face matching with the feature information is determined from the preset face material library, and the target motion video matching with the feature information is determined from the preset motion video library, the target virtual face and the facial image in the target motion video may be fused to generate the virtual idol corresponding to the target object. For ease of understanding of how to fuse the target virtual face and the facial image in the target motion video to generate the virtual idol corresponding to the target object in the embodiments of the present disclosure, a detailed description will be made below through Embodiment 3 shown in FIG. 3.

### Embodiment 3

FIG. 3 is a schematic flowchart of a method of generating a virtual idol corresponding to a target object according to Embodiment 3 of the present disclosure. The method of generating a virtual idol corresponding to the target object may likewise be performed by a software and/or hardware apparatus. Exemplarily, with reference to FIG. 3, the method of generating a virtual idol corresponding to the target object may include:
S301: the target virtual face and the facial image are fused to obtain a target fused image.

Exemplarily, when the target virtual face and the facial image are fused, a face fusion network model may be obtained; and the target virtual face and the facial image are input to the face fusion network model, and the target virtual face and the facial image are fused by means of the face fusion network model to obtain the target fused image.

Exemplarily, when the face fusion network model is used to fuse the target virtual face and the facial image, reference may be made to FIG. 4. FIG. 4 is a schematic diagram of a face fusion network model according to an embodiment of the present disclosure. The target virtual face and the facial image may be input to the face fusion network model, and feature vectors of the target virtual face and the facial image may be extracted separately by means of the face fusion network model, where a feature vector of the target virtual face may be denoted as Xt for providing context information and expression information required by the target fused image; a feature vector of the facial image may be denoted as Xs for providing identity information required by the target fused image; and then the feature vector Xt of the target virtual face and the feature vector Xs of the facial image are fused by means of an AAD generator in the face fusion network model to obtain the fused target fused image.

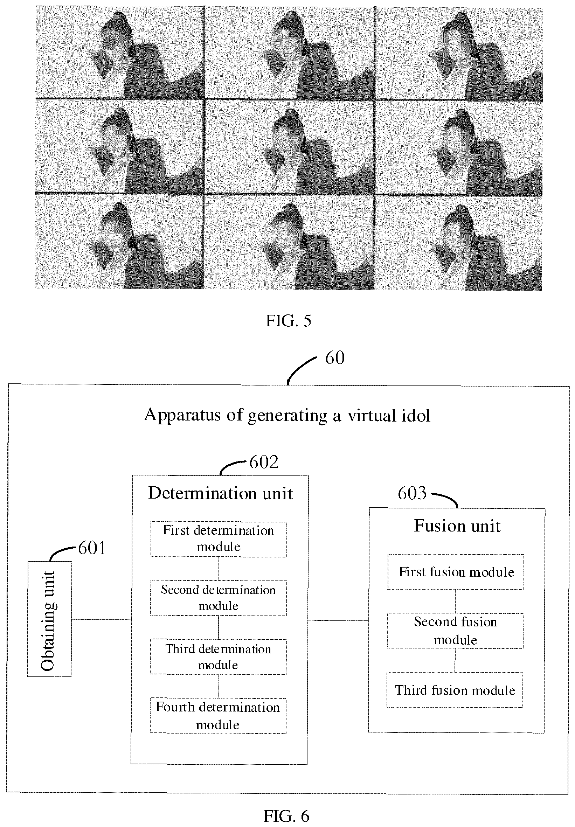

Exemplarily, with reference to FIG. 5, FIG. 5 is a schematic diagram of a target fused image according to an embodiment of the present disclosure. As can be seen, the target fused image obtained by using the face fusion network model to fuse the target virtual face and the facial image has a higher similarity, a higher definition, and a better time sequence stability compared with the target virtual face and the facial image.

After the target virtual face and the facial image are fused to obtain the target fused image, the target fused image may be used to replace the facial image in the target motion video to obtain a new motion video, that is, S302 is implemented:
S302: the target fused image is used to replace the facial image in the target motion video to obtain a new motion video.

A facial image in the new motion video is the target fused image obtained by fusion, and motions are still the ones in the target motion video.

S303: the virtual idol is generated based on the new motion video.

Exemplarily, when the virtual idol is generated based on the new motion video, a keypoint detection technique may be used to extract keypoints in the new motion video, where the keypoints include facial keypoints, hand keypoints, and limb keypoints; and the virtual idol is built based on the facial keypoints, the hand keypoints, and the limb keypoints, and the virtual idol built in this manner is a dynamic virtual idol that may perform the new motion video.

As can be seen, in the embodiments of the present disclosure, when the target virtual face and the facial image in the target motion video are fused to generate the virtual idol corresponding to the target object, the target virtual face and the facial image may be fused first to obtain the target fused image; the target fused image is used to replace the facial image in the target motion video to obtain the new motion video; and then the dynamic virtual idol is generated based on the new motion video, and the virtual idol for the scenario where the target object is endorsed may be generated in a targeted manner based on the target virtual face and the target motion video, so that the virtual idol may subsequently be used to endorse the target object.

Based on any one of the above embodiments, after the virtual idol for the scenario where the target object is endorsed, to enable the virtual idol to endorse the target object, the photographing device may further be used to acquire a target motion performed when the user endorses the target object, and the virtual idol may be driven to perform the target motion, so that the virtual idol can implement the target motion to use the virtual idol to endorse the target object.

### Embodiment 4

FIG. 6 is a schematic structural diagram of an apparatus 60 of generating a virtual idol according to Embodiment 4 of the present disclosure. Exemplarily, with reference to FIG. 6, the apparatus 60 of generating a virtual idol may include:
an obtaining unit 601 configured to obtain feature information of a target object;
a determination unit 602 configured to determine, from a preset face material library, a target virtual face matching with the feature information, and determine, from a preset motion video library, a target motion video matching with the feature information; and
a fusion unit 603 configured to fuse the target virtual face and a facial image in the target motion video to generate a virtual idol corresponding to the target object.

Optionally, the fusion unit 603 includes a first fusion module, a second fusion module, and a third fusion module.

The first fusion module is configured to fuse the target virtual face and the facial image to obtain a target fused image.

The second fusion module is configured to use the target fused image to replace the facial image in the target motion video to obtain a new motion video.

The third fusion module is configured to generate the virtual idol based on the new motion video.

Optionally, the third fusion module includes a first fusion submodule and a second fusion submodule.

The first fusion submodule is configured to use a keypoint detection technique to extract keypoints in the new motion video, where the keypoints include facial keypoints, hand keypoints, and limb keypoints.

The second fusion submodule is configured to build the virtual idol based on the facial keypoints, the hand keypoints, and the limb keypoints.

Optionally, the first fusion module includes a third fusion submodule and a fourth fusion submodule.

The third fusion submodule is configured to obtain a face fusion network model.

The fourth fusion submodule is configured to input the target virtual face and the facial image to the face fusion network model to obtain the target fused image.

Optionally, the apparatus 60 of generating a virtual idol further includes an acquisition unit and a driving unit.

The acquisition unit is configured to acquire, by means of a photographing device, a target motion performed when a user endorses the target object.

The driving unit is configured to drive the virtual idol to perform the target motion.

Optionally, the determination unit 602 includes a first determination module and a second determination module.

The first determination module is configured to determine a target virtual face type corresponding to the feature information.

The second determination module is configured to determine the target virtual face from the preset face material library based on the target virtual face type.

Optionally, the face material library includes a plurality of virtual faces, and each of the plurality virtual faces is annotated with a virtual face type; and the second determination module includes a first determination submodule and a second determination submodule.

The first determination submodule is configured to determine and display virtual faces corresponding to the target virtual face type from the preset face material library.

The second determination submodule is configured to: in response to a selection instruction in the plurality of virtual faces, determine the target virtual face from the virtual faces.

Optionally, the determination unit 602 further includes a third determination module and a fourth determination module.

The third determination module is configured to determine a target costume type corresponding to the feature information.

The fourth determination module is configured to determine the target motion video from the preset motion video library based on the target costume type.

Optionally, the motion video library includes a plurality of motion videos, and a costume of each motion video is annotated with a costume type; and the fourth determination module includes a third determination submodule and a fourth determination submodule.

The third determination submodule is configured to determine and display motion videos corresponding to the target costume type from the preset motion video library.

The fourth determination submodule is configured to: in response to a selection instruction in the motion videos, determine the target motion video from the motion videos.

The apparatus 60 of generating a virtual idol according to the embodiment of the present disclosure may perform the technical solutions of the method of generating a virtual idol shown in any one of the above embodiments, where implementation principles and beneficial effects thereof are the same as those of the method of generating a virtual idol, so reference may be made to the implementation principles and the beneficial effects of the method of generating a virtual idol, which will not be described herein again.

According to an embodiment of the present disclosure, the present disclosure further provides an electronic device, a readable storage medium, and a computer program product.

According to an embodiment of the present disclosure, the present disclosure further provides a computer program product, and the computer program product includes: a computer program, where the computer program is stored in a readable storage medium, at least one processor of an electronic device can read the computer program from the readable storage medium, and the at least one processor executes the computer program to cause the electronic device to perform the solution provided by any one of the above embodiments.

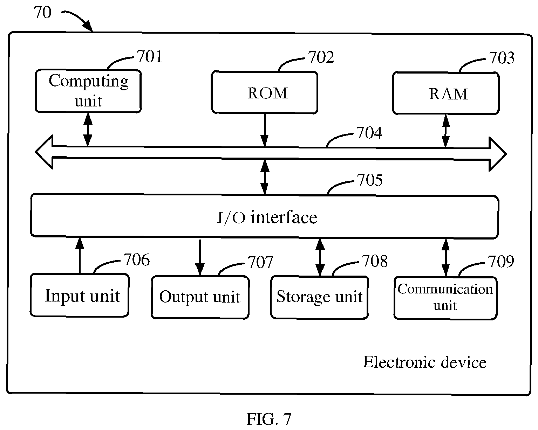

FIG. 7 is a schematic block diagram of an electronic device 70 according to an embodiment of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 7, the device 70 includes a computing unit 701, which may perform various appropriate actions and processing according to a computer program stored in a read-only memory (ROM) 702 or a computer program loaded from a storage unit 708 to a random access memory (RAM) 703. The RAM 703 may further store various programs and data required for the operation of the device 70. The computing unit 701, the ROM 702, and the RAM 703 are connected to each other through a bus 704. An input/output (I/O) interface 705 is also connected to the bus 704.

A plurality of components in the device 70 are connected to the I/O interface 705, including: an input unit 706, such as a keyboard or a mouse; an output unit 707, such as various types of displays or speakers; a storage unit 708, such as a magnetic disk or an optical disc; and a communication unit 709, such as a network interface card, a modem, or a wireless communication transceiver. The communication unit 709 allows the device 70 to exchange information/data with other devices through a computer network, such as the Internet, and/or various telecommunications networks.

The computing unit 701 may be various general-purpose and/or special-purpose processing components with processing and computing capabilities. Some examples of the computing unit 701 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 701 performs the various methods and processing described above, for example, the method of generating a virtual idol. For example, in some embodiments, the method of generating a virtual idol may be implemented as a computer software program, which is tangibly contained in a machine-readable medium, such as the storage unit 708. In some embodiments, a part or all of the computer program may be loaded and/or installed onto the device 70 via the ROM 702 and/or the communication unit 709. When the computer program is loaded onto the RAM 703 and executed by the computing unit 701, one or more steps of the method of generating a virtual idol described above can be performed. Alternatively, in other embodiments, the computing unit 701 may be configured, by any other suitable means (for example, by means of firmware), to perform the method of generating a virtual idol.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: The systems and technologies are implemented in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), and the Internet.

A computer system may include a client and a server. The client and the server are generally far away from each other and usually interact through a communications network. A relationship between the client and the server is generated by computer programs running on respective computers and having a client-server relationship with each other. The server may be a cloud server, which is also referred to as a cloud computing server or a cloud host, and is a host product in a cloud computing service system for overcoming defects of difficult management and weak business expansion in conventional physical hosts and virtual private server (VPS) services. The server may alternatively be a server in a distributed system, or a server combined with a blockchain.

It should be understood that steps may be reordered, added, or deleted based on the various forms of procedures shown above. For example, the steps recorded in the present disclosure can be performed in parallel, in order, or in a different order, provided that the desired result of the technical solutions disclosed in the present disclosure can be achieved, which is not limited herein.

The specific implementations above do not constitute a limitation on the protection scope of the present disclosure. Those skilled in the art should understand that various modifications, combinations, sub-combinations, and replacements can be made based on design requirements and other factors. Any modifications, equivalent replacements, improvements, etc. within the spirit and principle of the present disclosure shall fall within the protection scope of the present disclosure.

## Claims

1. A method of generating a virtual idol, comprising:
obtaining (S101) feature information of a target object;
determining (S102), from a preset face material library, a target virtual face matching with the feature information, and determining, from a preset motion video library, a target motion video matching with the feature information; and
fusing (S103) the target virtual face and a facial image in the target motion video to generate a virtual idol corresponding to the target object.

2. The method according to claim 1, wherein the fusing the target virtual face and a facial image in the target motion video to generate a virtual idol corresponding to the target object comprises:
fusing the target virtual face and the facial image to obtain a target fused image;
using the target fused image to replace the facial image in the target motion video to obtain a new motion video; and
generating the virtual idol based on the new motion video.

3. The method according to claim 2, wherein the generating the virtual idol based on the new motion video comprises:
using a keypoint detection technique to extract keypoints in the new motion video, wherein the keypoints comprise facial keypoints, hand keypoints, and limb keypoints; and
building the virtual idol based on the facial keypoints, the hand keypoints, and the limb keypoints.

4. The method according to claim 2, wherein the fusing the target virtual face and the facial image to obtain a target fused image comprises:
obtaining a face fusion network model; and
inputting the target virtual face and the facial image to the face fusion network model to obtain the target fused image.

5. The method according to any one of claims 1 to 4, the method further comprising:
acquiring, by means of a photographing device, a target motion performed when a user endorses the target object; and
driving the virtual idol to perform the target motion.

6. The method according to any one of claims 1 to 5, wherein the determining, from a preset face material library, a target virtual face matching with the feature information comprises:
determining a target virtual face type corresponding to the feature information; and
determining the target virtual face from the preset face material library based on the target virtual face type.

7. The method according to claim 6, wherein the face material library comprises a plurality of virtual faces, and each of the plurality virtual faces is annotated with a virtual face type; and
the determining the target virtual face from the preset face material library based on the target virtual face type comprises:
determining and displaying virtual faces corresponding to the target virtual face type from the preset face material library; and
in response to a selection instruction among the virtual faces, determining the target virtual face from the virtual faces.

8. The method according to any one of claims 1 to 7, wherein the determining, from a preset motion video library, a target motion video matching with the feature information comprises:
determining a target costume type corresponding to the feature information; and
determining the target motion video from the preset motion video library based on the target costume type.

9. The method according to claim 8, wherein the motion video library comprises a plurality of motion videos, and a costume of each of the plurality of motion videos is annotated with a costume type; and
the determining the target motion video from the preset motion video library based on the target costume type comprises:
determining and displaying motion videos corresponding to the target costume type from the preset motion video library; and
in response to a selection instruction among the motion videos, determining the target motion video from the motion videos.

10. An apparatus of generating a virtual idol, comprising:
an obtaining unit configured to obtain feature information of a target object;
a determination unit configured to determine, from a preset face material library, a target virtual face matching with the feature information, and determine, from a preset motion video library, a target motion video matching with the feature information; and
a fusion unit configured to fuse the target virtual face and a facial image in the target motion video to generate a virtual idol corresponding to the target object.

11. The apparatus according to claim 10, wherein the fusion unit comprises a first fusion module, a second fusion module, and a third fusion module, wherein
the first fusion module is configured to fuse the target virtual face and the facial image to obtain a target fused image;
the second fusion module is configured to use the target fused image to replace the facial image in the target motion video to obtain a new motion video; and
the third fusion module is configured to generate the virtual idol based on the new motion video.

12. The apparatus according to any one of claims 10 to 11, the apparatus further comprising an acquisition unit and a driving unit, wherein
the acquisition unit is configured to acquire, by means of a photographing device, a target motion performed when a user endorses the target object; and
the driving unit is configured to drive the virtual idol to perform the target motion.

13. The apparatus according to any one of claims 10 to 12, wherein the determination unit further comprises a third determination module and a fourth determination module;
the third determination module is configured to determine a target costume type corresponding to the feature information; and
the fourth determination module is configured to determine the target motion video from the preset motion video library based on the target costume type.

14. A computer-readable storage medium having computer program instructions stored thereon, wherein the computer program instructions, when executed by a processor, cause the processor to perform the method according to any one of claims 1-9.

15. A computer program product comprising computer program instructions, wherein the computer program instructions, when executed by a processor, cause the processor to perform the method according to any one of claims 1-9.
